# FASCICULE DE BREVET EUROPEEN

(11) **EP 1 057 087 B1**
(45) Date de publication et mention de la délivrance du brevet: **25.02.2004**
(21) Numéro de dépôt: 99958334.7
(22) Date de dépôt: 15.12.1999
(51) Int. Cl.: G05D 1/10

(54) **PROCEDE DE RECONFIGURATION EN TEMPS REEL DE TRAJECTOIRES POUR UN AERONEF**
VERFAHREN ZUR REKONFIGURIERUNG IN ECHTZEIT DER FLUGBAHNEN EINES FLUGZEUGES
METHOD FOR REAL TIME RECONFIGURATION OF TRAJECTORIES FOR AN AIRCRAFT

(30) Priorité: 18.12.1998 FR 9816026
(43) Date de publication de la demande: 06.12.2000
(73) Titulaire: THALES AVIONICS S.A., 78141 Vélizy Villacoublay Cédex (FR)
(72) Inventeur: BONHOURE, Fabienne, Thomson-CSF P.I., D. Brevets, 94117 Arcueil Cedex (FR); INGLESE, Fabien, Thomson-CSF P.I., Dép. Brevets, 94117 Arcueil cedex (FR)
(74) Mandataire: Beylot, Jacques
(86) Numéro de dépôt international: PCT/FR1999/003149
(87) Numéro de publication internationale: WO 2000/038030

(56) Documents cités:
- EP-A- 0 617 349
- WO-A-95/19547
- FR-A- 2 749 675
- FR-A- 2 749 686

## Description

La présente invention concerne un procédé pour l'élaboration de trajectoires pour un aéronef.

Elle s'applique notamment, mais non exclusivement, à l'aviation civile ou militaire, et aux aéronefs pilotés ou bien dirigés depuis le sol.

Généralement, le bon déroulement de la mission d'un aéronef repose sur la définition d'un plan de vol établi lors de la préparation de la mission. Ce plan de vol comprend, entre autres éléments, une trajectoire nominale à suivre au cours de la mission définie dans un espace à cinq dimensions: latitude, longitude, altitude, temps de passage et réserve de carburant. Cependant, des événements imprévus peuvent survenir pendant le déroulement, de la mission rendant la trajectoire nominale prévue lors de la préparation de la mission inadaptée, voire obsolète. Ces événements peuvent consister, par exemple en une panne d'un organe vital de l'aéronef, de nouvelles conditions météorologiques, un changement d'objectif, ou l'apparition d'une zone dangereuse traversée au cours de la partie restant à parcourir de la trajectoire nominale.
Il est alors nécessaire de modifier, en cours de vol, la partie restant à parcourir de la trajectoire nominale prévue en ayant en vue de remettre en cause le moins possible les objectifs de la mission.

La trajectoire nominale choisie lors d'une préparation de mission est définie par une succession de points de passages imposés à aborder selon des altitudes, des caps, des horaires, avec des réserves minimum de carburant, et, éventuellement, par des positions et étendues de zones dangereuses à éviter.

Une modification, en cours de vol, d'une partie restant à parcourir de la trajectoire nominale assignée lors de la préparation de la mission, pour prendre en compte un événement non pris en compte lors de la préparation de la mission, est une tâche difficile car elle doit être rapidement finalisée alors qu'un très grand nombre de possibilités de reconfiguration de la trajectoire nominale se profilent parmi lesquelles il est difficile de distinguer rapidement, celle qui satisfait au mieux les nombreuses contraintes rencontrées, qu'elles soient liées aux conditions de vol de l'aéronef, à ses capacités manoeuvrières, à son autonomie en carburant ou aux objectifs de la mission, cela d'autant que ces contraintes se traduisent souvent par des exigences contradictoires, comme par exemple, sécurité, économie, efficacité.

On a donc cherché à faciliter la tâche d'un pilote d'aéronef lorsque le besoin de modifier la trajectoire nominale se fait sentir au cours du vol, en l'assistant par un automate lui proposant une reconfiguration de trajectoire qui soit utilisable par un système de pilotage automatique et par un afficheur cartographique, et qui soit optimale du point de vue de la satisfaction des contraintes du moment, imposées par les conditions de vol de l'aéronef, ses capacités manoeuvrières, son autonomie en carburant, les objectifs de la mission et les importances relatives qui leur sont accordées sur le moment.

Il existe divers procédés de recalcul de trajectoire exécutable par un calculateur embarqué aidé ou non par un opérateur, permettant de proposer au pilote d'un aéronef en cours de mission, une reconfiguration de sa trajectoire nominale par un système de pilotage automatique et par un afficheur cartographique, et minimisant les conséquences d'un événement imprévu sur la sécurité et l'efficacité de sa mission.

Certains de ces procédés font appel à des méthodes d'optimisation de coût. Ils déterminent, en fonction de la position spatio-temporelle et de la manoeuvrabilité de l'aéronef, l'ensemble des trajets de contournement respectant les nouvelles contraintes imposées par l'événement imprévu et permettant de récupérer au plus vite la trajectoire nominale en respectant l'horaire et l'autonomie en carburant prévus lors de la préparation de la mission puis procèdent à la sélection, parmi tous ces trajets de contournement possibles, de celui qui a un coût minimal, c'est-à-dire qui est optimal en terme de sécurité, économie et efficacité de la mission. L'évaluation du coût d'une trajectoire se fait à partir de son cheminement sur une surface de coût superposée à la région survolée au cours de la mission. La surface de coût est définie au moyen d'une grille de points avec un maillage régulier plus ou moins serré fonction de la précision recherchée, chaque point de la grille étant affecté d'une note de préférence établie en fonction des contraintes de la mission en termes d'efficacité et de sécurité. Le coût d'une trajectoire correspond à l'inverse de la somme des notes de préférences affectées à chaque point rencontré de la surface de coût.
Ces procédés nécessitent, pour leurs mises en oeuvre, par un calculateur embarqué, une puissance de calcul et une quantité de mémoire très importante puisqu'ils impliquent la mise à jour, en temps réel, de la surface de coût pour tenir compte de l'avènement d'un événement imprévu, suivie du calcul toujours en temps réel et dans le détail, d'un ensemble de trajets de contournement possibles et du calcul de leurs coûts respectifs.

D'autres procédés tentent, en faisant appel à des niveaux de représentation de mission plus ou moins détaillés, d'étudier un grand nombre de solutions alternatives dans le but de leur associer un critère d'efficacité ou de risque. Toutefois, pour pouvoir fournir une réponse en temps réel ces procédés nécessitent une importante puissance de calcul, incompatible avec celle des calculateurs existants à l'heure actuelle à bord des aéronefs. En outre, ils requièrent l'intervention du pilote qui doit détourner son attention de la mission en cours pour examiner toutes les solutions proposées qui peuvent être en grand nombre, pour en sélectionner une. Dans ce contexte, le pilote n'a pas la maîtrise du moment où il doit introduire son choix, car les solutions proposées deviennent très rapidement obsolètes du fait de la rapidité d'évolution de l'aéronef. Il en résulte que ces procédés sont inefficaces lorsque toute l'attention du pilote est requise par le pilotage ou l'utilisation d'autres systèmes (par exemple des systèmes d'arme ou de dialogue).

Il a été également proposé d'utiliser les techniques de l'intelligence artificielle et plus particulièrement un système à base de connaissances et de règles connu sous le nom de système expert pour la détermination de la reconfiguration de trajectoire à proposer au pilote comme étant celle réalisant le compromis optimal entre les diverses exigences du moment. Mais un système expert réclame la construction d'une base de connaissance et de règles difficile à mettre au point dans le cas de la détermination d'une trajectoire à trois dimensions, dans laquelle interviennent, en outre le temps, la vitesse, et d'autres paramètres, et l'évaluation de son efficacité à répondre aux objectifs de la mission en fonction d'une multiplicité d'autres critères.

Pour résoudre cette difficulté, on a proposé dans la demande européenne de brevet EP 0 617 349 de faire appel aux techniques de multi-expertise qui permettent de faire travailler en coopération plusieurs systèmes experts à base de connaissances et de règles chacun spécialisé dans un domaine donné. Le procédé de détermination de la nouvelle trajectoire comprend:
- l'analyse du contexte et l'interprétation de l'événement justifiant une reconfiguration de trajectoire pour déterminer les actions à effectuer,
- la décomposition desdites actions en alternatives constituées chacune d'une séquence d'actions élémentaires exécutables par l'un au moins des modules spécialisés
- la sélection successive de chaque alternative en fonction d'une certaine stratégie,
- le traitement des l'alternatives sélectionnées consistant, pour chaque alternative, à mettre en oeuvre les modules experts spécialisés en vue de l'élaborer une trajectoire à l'aide des actions élémentaires composants l'alternative sélectionnée, et à évaluer l'intérêt de la trajectoire obtenue en fonction d'au moins un critère, et
- la sélection d'au moins une trajectoire présentant la meilleure évaluation et sa présentation en tant que solution associée à son évaluation.
Ce procédé reste assez lourd à mettre en oeuvre du fait qu'il implique la détermination d'un ensemble de solutions de reconfiguration de trajectoire et d'un choix parmi celles-ci de la plus optimale.

La présente invention propose un procédé de reconfiguration de trajectoire en temps réel n'aboutissant, à chaque instant, à la détermination détaillée, utilisable par un système de pilotage automatique ou un afficheur cartographique, que d'une seule trajectoire de reconfiguration, le choix entre les différentes possibilités de déroutement pour tenir compte de l'avènement d'un événement non pris en compte lors de la préparation d'une mission étant ramené, après analyse du contexte temps réel aéronef-mission et détection d'un événement justifiant une reconfiguration de trajectoire, à l'assimilation de ce contexte temps réel à une catégorie prédéfinie de contexte choisie parmi plusieurs stockées en mémoire tenant compte de différentes éventualités de contextes et correspondant chacune à une méthode de reconfiguration spécifique n'aboutissant qu'à la détermination détaillée d'une seule trajectoire de reconfiguration. La charge de calcul est moindre que dans les procédés connus précités puisque le choix de la trajectoire de reconfiguration s'effectue très en amont de sa définition précise utilisable par un système de pilotage automatique ou par un afficheur cartographique.

Plus précisément, ce procédé est mis en oeuvre par un calculateur recevant en temps réel des informations fournies par les organes embarqués à bord de l'aéronef, concernant la situation de l'aéronef par rapport à son environnement spatial et temporel, son autonomie, ses possibilités d'évolution et mémorisant des données concernant la mission de l'aéronef pouvant être mises à jour en cours de mission, dont une trajectoire nominale en cinq dimensions, trois dimensions spatiales, une dimension temporelle et une dimension représentative de l'autonomie en carburant, ces informations constituant un contexte aéronef-mission temps réel ; ce calculateur étant relié à un dispositif de pilotage automatique et à un afficheur donnant sur un fond cartographique une représentation de la trajectoire en cours et indiquant la position courante de l'aéronef par rapport à cette trajectoire.

Il comprend en vue d'adapter la mission à une situation nouvelle engendrée par l'arrivée d'un ou plusieurs événements perturbateur,:
- la mise à jour des données de contexte aéronef-mission temps réel modifié par l'arrivée de l'événement perturbateur, et
- la détection dans le contexte aéronef-mission temps réel mis à jour de l'apparition d'un ou plusieurs événements justifiant une reconfiguration de la trajectoire nominale,
Il est caractérisé en ce qu'il comporte, à la suite des étapes précédentes:
- la sélection, en fonction du contexte aéronef-mission temps réel mis à jour, d'une méthode de reconfiguration de trajectoire parmi une collection de méthodes prédéfinies de reconfiguration de trajectoire disponibles en mémoire, permettant chacune, par leur mise en oeuvre, l'obtention d'une seule trajectoire reconfigurée, chacune de ces méthodes de reconfiguration étant adaptée à une catégorie spécifique de contexte aéronef-mission prédéfinie, ladite sélection d'une méthode prédéfinie de reconfiguration de trajectoire s'effectuant par assimilation du contexte aéronef-mission temps réel à la catégorie de contexte aéronef-mission prédéfinie la plus proche à partir de critères de sélection portant notamment sur les valeurs des écarts spatial, temporel et d'autonomie en carburant constatés par rapport à la trajectoire nominale, et la méthode prédéfinie de reconfiguration de trajectoire sélectionnée traduisant directement la stratégie opérationnelle habituellement mise en oeuvre par les équipages des aéronefs placés dans la catégorie de contexte aéronef-mission prédéfinie choisie,
- l'exécution de la méthode prédéfinie de reconfiguration sélectionnée, qui détermine en fonction des données de mission et du contexte temps réel une nouvelle trajectoire exécutable par le système de pilotage automatique,
- l'affichage sur l'afficheur de la nouvelle trajectoire, en surimpression sur la trajectoire en cours, et
- si le pilote valide cette nouvelle trajectoire, la transmission des informations caractérisant cette nouvelle trajectoire au dispositif de pilotage automatique.

Grâce à ces dispositions, toutes les opérations de sélection d'une solution de reconfiguration de la mission sont effectuées avant la détermination, effective et coûteuse en temps et puissance de calcul, d'une trajectoire directement exécutable par un dispositif de pilotage automatique. Le procédé selon l'invention permet ainsi de proposer en temps réel une trajectoire apte à répondre à chaque nouvelle situation, au moment où elle se présente. Cette rapidité de réponse peut être obtenue avec les calculateurs équipant actuellement les aéronefs sans affecter les autres fonctions effectuées par ces calculateurs, et ne nécessite pas de nouveaux équipements.

Par ailleurs, la méthode de reconfiguration sélectionnée correspond sensiblement au raisonnement effectué par le pilote dans une situation comparable. Il en résulte que si le pilote n'est pas d'accord avec la nouvelle trajectoire proposée, il peut, par une action directe sur le pilotage de l'aéronef (vitesse, cap ou altitude), modifier le contexte temps réel de l'aéronef, de manière à forcer le procédé à calculer une nouvelle trajectoire qui correspond au souhait du pilote. Il peut également forcer le passage sur un but particulier ou modifier une ou plusieurs contraintes de la mission.

Bien entendu, dans le cas où l'événement détecté est un retard ou une avance sur un horaire prévu, cette nouvelle trajectoire peut correspondre à la trajectoire qui était suivie précédemment, avec uniquement une modification de la vitesse de parcours de cette trajectoire.

Les événements peuvent provenir directement des différents organes connectés au calculateur. Ils peuvent aussi être générés par une tâche de surveillance de l'environnement de l'aéronef qui évalue des paramètres à partir des données du contexte temps réel, et les compare à des seuils ou des valeurs attendues, un dépassement de seuil ou une détection de valeur non conforme provoquant la génération d'un événement.

Avantageusement, les données de mission comprennent trois types de contraintes, à savoir des contraintes spatiales (trajectoire initiale, points de passage imposés), des contraintes temporelles (heures de rendez-vous), et des contraintes en carburant, le procédé selon l'invention comprenant l'association de chacun de ces types de contraintes à un ensemble de valeurs de priorité respective donnant la priorité respective de prise en compte des contraintes de ce type à chaque étape de la mission, le procédé selon l'invention comprenant la prise en compte de ces ensembles de valeurs de priorité lors de l'analyse du contexte temps réel et l'exécution d'une méthode de reconfiguration.

La contrainte en carburant correspond à la capacité de l'aéronef à traiter la mission et d'atterrir avec une réserve suffisante de carburant, compte tenu de son autonomie qui peut intégrer un ravitaillement en vol pour les missions militaires.

Ainsi, si par exemple la contrainte spatiale est prioritaire et que l'aéronef s'écarte de la trajectoire en cours, le procédé selon l'invention va élaborer une trajectoire de rejointe de cette trajectoire en fonction de la position courante de l'aéronef et de la présence d'un point de passage imposé à proximité de l'aéronef.

Avantageusement, la mise à jour du contexte aéronef-mission temps réel comporte une analyse de la situation temps réelle dite surveillance de l'environnement, tenant compte:
- de la mission définie par des informations enregistrées avant le vol ou reçues au cours du vol dont la trajectoire nominale en cinq dimensions, des mentions de zones dangereuses, de points de passage imposés etc.,
- des données propres à l'aéronef comme sa position spatio-temporelle, la quantité de carburant effectivement disponible, la phase de vol dans laquelle il se trouve, les zones d'obstacles nouvellement apparues, les prévisions de changement de phase de vol, les pannes éventuelles, l'évolution météorologiques, etc...

Avantageusement, les méthodes prédéfinies de reconfiguration de trajectoire font chacune appel à un module spécialisé choisi parmi un ensemble de modules spécialisés qui leur sont communs et résolvent chacun un problème spécifique de reconfiguration d'itinéraire.

Avantageusement, lesdits modules spécialisés résolvent chacun un problème spécifique de reconfiguration d'itinéraire dans les cinq dimensions de l'espace, du temps et de l'autonomie en carburant tel que:
- coupure de trajectoire 5D,
- extension de trajectoire 5D,
- trajectoire 5D d'évitement de menace nouvelle ou non,
- trajectoire de rejointe 5D d'un itinéraire 5D avec évitement de menace,
- trajectoire de rejointe 5D d'un itinéraire 5D avec évitement de menace et avec destination imposée,
- trajectoire 5D de retour direct / retour d'urgence en terrain accessible en météo / carburant,
- modification de vitesse pour retard sur trajectoire 5D,
- modification de vitesse pour avance sur trajectoire 5D
- trajectoire 5D de gestion de ravitaillement en vol,
- trajectoire 5D de prise en compte de modification de contrainte,
- trajectoire 5D de construction d'un plan de vol modifié.

Avantageusement, les méthodes prédéfinies de configuration sont à profondeur finie, c'est-à-dire que les modules spécialisés auxquels elles font appel ne recourent qu'à un nombre limité d'étapes de résolution, chaque étape de résolution consistant en la résolution d'un problème partiel de reconfiguration. Cela permet de garantir l'élaboration et l'affichage en temps limité d'une proposition de reconfiguration de trajectoire 5D adaptée au mieux au contexte évolutif d'une mission. Le temps d'élaboration d'une proposition de reconfiguration de trajectoire étant maîtrisé, celle-ci peut être rafraîchie périodiquement avec une fréquence suffisamment élevée, par exemple de l'ordre du hertz, pour donner au pilote de l'aéronef une vision continue des possibilités de reconfiguration de sa trajectoire.

Un mode de réalisation du procédé selon l'invention sera décrit ci-après, à titre d'exemple non limitatif, avec référence aux dessins annexés dans lesquels
La figure 1 représente schématiquement l'équipement électronique embarqué à bord d'un aéronef et permettant de mettre en oeuvre le procédé selon l'invention ;
La figure 2 illustre sous la forme d'un schéma bloc le procédé selon l'invention;
La figure 3 montre schématiquement un algorithme représentant un exemple de plan de reconfiguration mis en oeuvre par le procédé selon l'invention ;
La figure 4 montre sous forme de courbes les valeurs des priorités respectives des contraintes de temps, d'espace et de carburant à chaque étape de la mission.

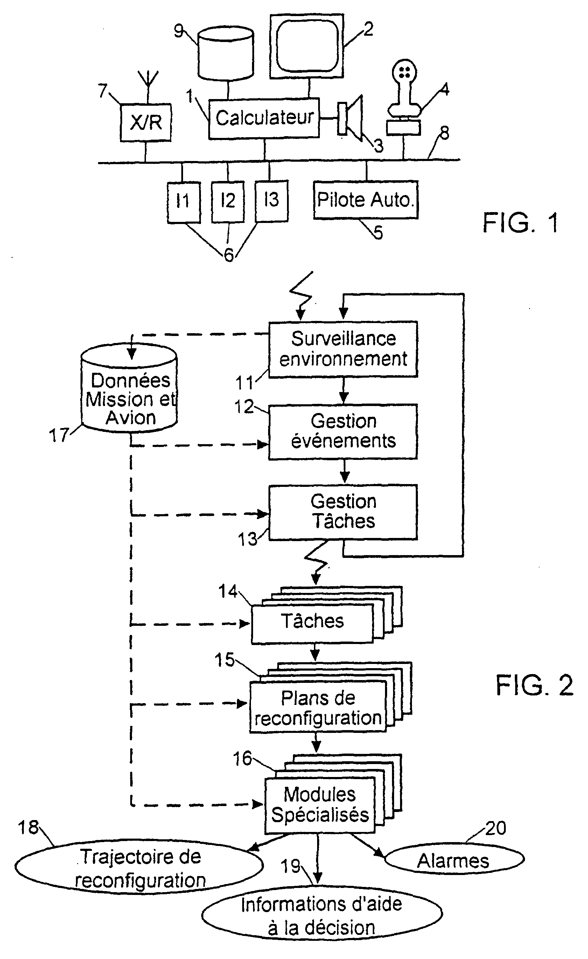

Le procédé selon l'invention est particulièrement adapté pour être mis en oeuvre par les équipements électroniques embarqués à bord d'un aéronef. Tel que représenté sur la figure 1, ces équipements comprennent un calculateur 1 connecté à un ou plusieurs écrans de visualisation 2, une mémoire de masse 9, et éventuellement un dispositif de signalisation d'alarmes, couplé à un haut-parleur 3 et/ou des voyants lumineux. Ce calculateur 1 est relié par un réseau de transmission de données 8, par exemple les bus de l'aéronef, aux capteurs et instruments de vol 6 embarqués, aux commandes de pilotage 4, à un dispositif de pilotage automatique 5 et à dispositif de transmission radio de données numériques 7, par exemple de type "data link". De cette manière, le calculateur 1 peut acquérir en temps réel les données émanant des autres équipements électroniques embarqués, à savoir notamment, la position géographique de l'aéronef, son altitude, sa vitesse, son état et la quantité de carburant disponible.

Le dispositif de pilotage automatique comprend une mémoire dans laquelle est enregistrée la trajectoire en cours, suivie par l'aéronef, cette trajectoire étant constituée d'une succession de segments de droite entre un point de départ et un point de destination, ces segments étant reliés par des arcs de cercles.

La mémoire de masse 9 contient les caractéristiques de l'aéronef, et en particulier les données définissant ses possibilités de manoeuvres, tel que le rayon minimum et optimum de virage en fonction de la vitesse, et la consommation en carburant en fonction de la vitesse, ainsi que toutes les données relatives à la mission.
Ces données de mission comprennent notamment :
- des données d'environnement géographique, tactique et météorologique, de la mission,
- les données relatives au plan de vol, associé à une trajectoire prévue en trois dimensions, permettant au calculateur notamment d'afficher sur l'écran cette trajectoire en surimpression sur l'image de la carte, et
- des données relatives aux contraintes en vitesse, route et carburant associées à chaque étape de la mission, la contrainte en carburant ou autonomie correspondant à la capacité de traiter la mission, et d'atterrir, compte tenu d'une réserve de carburant donnée ou d'un ravitaillement en vol prévu, dans le cas de missions militaires.

Les données d'environnement géographique comprennent des données cartographiques permettant au calculateur 1 notamment d'afficher sur l'écran 2 l'image d'une carte géographique de la zone survolée durant la mission, et des données relatives à la navigation, par exemple la position géographique et les caractéristiques des radiobalises et des aérodromes accessibles par l'aéronef durant la mission. Les données d'environnement tactique comprennent notamment la position et l'étendue d'éventuelles zones dangereuses à éviter, tandis que les données d'environnement météorologique comprennent les conditions météorologiques prévues durant la mission dans la zone survolée.

Les données relatives à la trajectoire prévue comprennent la position des points de passage imposés associés à une heure de rendez-vous, et une altitude de survol.

Toutes ces données peuvent être modifiées à tout instant, soit directement par le pilote ou les capteurs et instruments embarqués, soit par des informations reçues par la liaison radio.

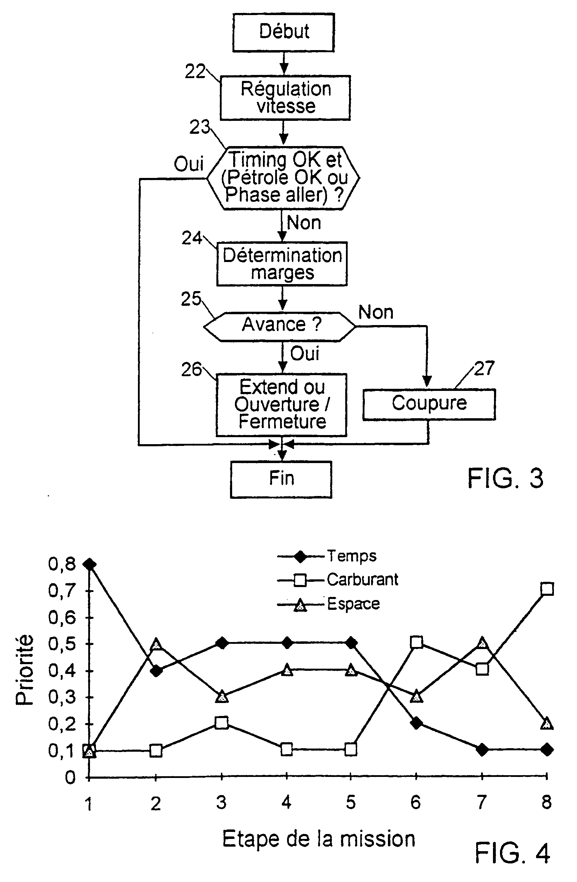

La mémoire de masse 9 comprend également, sous forme de logiciels, une collection de méthodes prédéfinies de reconfiguration de trajectoire permettant chacune, par leur mise en oeuvre, la détermination, sous une forme adaptée au système de pilotage automatique ou d'un écran de visualisation cartographique, d'une seule trajectoire reconfigurée ainsi qu'un procédé de sélection, en cas de besoin de la méthode prédéfinie de reconfiguration de trajectoire la mieux adaptée à la situation du moment. Les méthodes prédéfinies de reconfiguration de trajectoire différent entre elles et sont adaptées à différents contextes aéronef-mission prédéfinis prenant en compte l'essentiel des événements nécessitant une reconfiguration de la trajectoire nominale et pouvant subvenir de manière inopinée au cours d'une mission. Chacune d'elles traduit la stratégie opérationnelle habituellement mise en oeuvne par les équipages des aéronefs placés dans le contexte aéronef-mission prédéfini pour lequel elle est prévue. Un exemple de méthode prédéfinie de reconfiguration est représenté sur la figure 3.

Sur la figure 2, le procédé selon l'invention fait intervenir une tâche principale exécutée cycliquement comprenant :
- un module de surveillance de l'environnement 11 qui a pour but de surveiller l'environnement de la mission et le contexte temps réel 17, et en particulier, de détecter les événements remettant en cause le plan de vol initial.

- un module de gestion des événements 12 dont le rôle est d'attribuer un ordre de priorité à chaque événement détecté remettant en cause la configuration du plan de vol en fonction des importances relatives accordées sur le moment, aux contraintes spatiale, temporelle ou d'autonomie en carburant et, éventuellement, d'en associer plusieurs lorsque le contexte aéronef-mission implique de les traiter simultanément,
- un module de gestion des tâches 13 qui active et désactive des tâches 14, c'est-à-dire des temps de calcul chacun affecté spécifiquement au traitement d'un événement ou d'une association particulière d'événements détecté par le module de gestion des événements 12 et gère le partage de temps du calculateur entre toutes les tâches actives en tenant compte des degrés de priorité affectés aux événements ou aux associations d'événements auxquels elles correspondent. La tâche correspondant à l'événémént ou à l'association d'événements le plus prioritaire conduit à la seule proposition de reconfiguration de trajectoire proposée sur le moment au pilote. Les autres tâches moins prioritaires ne conduisent pas dans l'immédiat à une proposition de reconfiguration de trajectoire mais anticipent le déroulement de la mission. Elles peuvent être différées en fonction du contexte et du déroulement de la missions ou même supprimées dès que les événements auxquelles elles correspondent sont devenus obsolètes même si ceux-ci n'ont pas été entièrement traités.

Le module de surveillance 11 a également pour rôle de mettre à jour les données 17 de contexte temps réel et de mission, lorsque de nouvelles données sont reçues.
Le contexte temps réel regroupe les données courantes concernant notamment la position de l'aéronef, son altitude, sa vitesse, son cap, la quantité de carburant disponible dans les réservoirs, l'état de couplage des commandes de vol (pilote automatique actif ou non), et la phase en cours de la mission (si l'aéronef se trouve en zone ennemie ou amie, avant ou après l'objectif). Il mémorise également un historique de la mission, indiquant notamment si la trajectoire en cours est celle prévue initialement, si une panne est survenue, si un retour d'urgence ou un ravitaillement en vol est demandé.

Les tâches 14 activées par le module de gestion des tâches 13 peuvent être cycliques ou aléatoires (déclenchées par un événement), exécutables d'une manière exclusive ou non. Ainsi, par exemple, une tâche qui propose une trajectoire au pilote est exécutée cycliquement pour tenir compte de l'évolution du contexte temps réel, jusqu'à ce que le pilote valide la trajectoire proposée pour la rendre active. D'une manière générale, toutes les tâches qui fournissent une nouvelle trajectoire, sont cycliques et exclusives vis-à-vis des autres tâches de ce type. Ainsi, la trajectoire calculée et affichée sur l'afficheur 2 est remplacée cycliquement par une nouvelle trajectoire calculée de manière à ce que la trajectoire affichée ne soit jamais obsolète.

Chaque tâche vise à résoudre le problème posé par un événement particulier ou une association particulière d'événements à l'aide de la méthode prédéfinie de reconfiguration de trajectoire la mieux adaptée au contexte aéronef-mission temps réel, choisie parmi la collection de méthodes prédéfinies de reconfiguration 15 disponibles en mémoire. Pour cela, une tâche se décompose en deux parties, la sélection d'une méthode prédéfinie de reconfiguration de trajectoire et l'exécution de la méthode prédéfinie de reconfiguration de trajectoire sélectionnée.
Chacune de ces méthodes prédéfinies de reconfiguration 15 étant adaptée à une catégorie spécifique de contexte aéronef-mission prédéfinie à l'avance, tenant compte de divers événements nécessitant une reconfiguration de trajectoire et pouvant subvenir inopinément, la sélection de l'une d'entre elles s'effectue par assimilation du contexte aéronef-mission temps réel tenant compte de l'événement lié à la tâche considérée, à la catégorie de contexte aéronef-mission prédéfinie la plus proche, au moyen de critères de sélection portant notamment sur les valeurs des écarts spatial, temporel et d'autonomie en carburant constatés par rapport à la trajectoire nominale.
La mise en oeuvre de la méthode prédéfinie de reconfiguration de trajectoire sélectionnée 15 fait appel à un module spécialisé choisi parmi une collection de modules spécialisés 16 qui sont disponibles en mémoire et qui résolvent chacun un problème spécifique de reconfiguration d'itinéraire dans les cinq dimensions de l'espace, du temps et de l'autonomie en carburant tels que:
- coupure de trajectoire 5D,
- extension de trajectoire 5D,
- trajectoire 5D d'évitement de menace nouvelle ou non,
- trajectoire de rejointe 5D d'un itinéraire 5D avec évitement de menace,
- trajectoire de rejointe 5D d'un itinéraire 5D avec évitement de menace et avec destination imposée,
- trajectoire 5D de retour direct / retour d'urgence en terrain accessible en météo / carburant,
- modification de vitesse pour retard sur trajectoire 5D,
- modification de vitesse pour avance sur trajectoire 5D
- trajectoire 5D de gestion de ravitaillement en vol,
- trajectoire 5D de prise en compte de modification de contrainte,
- trajectoire 5D de construction d'un plan de vol modifié.
Ces modules spécialisés reçoivent en tant que paramètres, les données de mission et du contexte temps réel qui leur sont nécessaires. En plus de la solution des problèmes spécifiques de reconfiguration de trajectoire auxquels ils sont dédiés, les modules spécialisés 16 fournissent également des informations 19 d'aide à la décision en association avec la trajectoire 18 qu'ils proposent, et peuvent produire des alarmes 20, par exemple lorsque le problème à résoudre ne présente pas de solution.
Il est à noter que certains modules spécialisés dits de haut niveau peuvent appeler des modules spécialisés de plus bas niveau.

Il est prévu de fournir des informations sur la demande du pilote. Lorsque le calculateur 1 détecte que la commande prévue à cet effet a été actionnée par le pilote de l'aéronef, et que le type d'informations souhaitées a été sélectionné, le module de surveillance de l'environnement 11 mémorise dans les données de contexte temps réel 17 que le pilote a demandé tel type d'informations, et génère un événement de demande d'informations correspondant. Le module de gestion d'événement 12 détecte l'apparition de cet événement, et appelle le module de gestion des tâches 13 pour lui demander de traiter cet événement. Le module de gestion des tâches 13 déclenche alors une tâche 14 aléatoire, non exclusive et à priorité élevée, de détermination des informations requises, cette tâche appelant la méthode prédéfinie de reconfiguration de trajectoire 15 adaptée à la demande du pilote, laquelle va utiliser le ou les modules spécialisés 16 permettant de résoudre le problème posé.
Les informations requises 19 sont finalement affichées à l'écran 2.

Pour illustrer le rôle de chacun des éléments 11 à 16, on suppose que le pilote actionne la manette des gaz pour réduire la vitesse de l'aéronef qui se trouve couplé sur sa trajectoire initiale en phase aller (avant l'objectif), et en zone ennemie.

Le module de surveillance de l'environnement 11 détecte que la vitesse de l'aéronef n'est pas celle qui est prévue et que de ce fait, l'aéronef ne pourra pas atteindre les objectifs prévus aux heures prévues, et génère un événement "timing".
On peut prévoir également que le module de surveillance de l'environnement génère une alarme par le dispositif de signalisation d'alarmes 3, notamment lors de la détection d'un événement perturbateur susceptible de remettre en cause la trajectoire en cours.

Le module de gestion des événements 12 reçoit cet événement et lui donne un ordre de priorité.

Le module de gestion des tâches 13 lui attribue une tâche dont il détermine le type: cyclique ou non, exclusif ou non en fonction de l'événement considéré et gère cette tâche avec toutes les autres tâches en cours. Cette gestion inclut un traitement de filtrage permettant de différer ou de supprimer ladite tâche s'il s'avère qu'une autre tâche en cours est déjà affectée au même événement ou s'il s'avère que ledit événement est la conséquence de l'exécution d'une autre tâche en cours traitant, par exemple une panne. Si la tâche réchappe du traitement de filtrage, elle est prise en compte et exécutée avec les autres en tenant compte de son degré de priorité. Son exécution peut amener à la suppression d'autres tâches en cours d'exécution car devenues obsolètes du fait de son arrivée.

La tâche correspondant à l'événement "timing" permet l'entretien du timing et est cyclique et exclusive. Elle présente une priorité assez faible, par exemple 2 sur une échelle de 1 à 10. Il faut noter par exemple que lorsqu'un ravitaillement en vol est prévu, la génération de la trajectoire vers l'hippodrome de rendez-vous est de priorité supérieure car elle gère en même temps l'écart spatial et temporel.

Lorsqu'aucune tâche de priorité supérieure n'est en cours d'exécution, la tâche d'entretien du timing est déclenchée, tandis que toutes les autres tâches actives, de priorité moins élevée sont interrompues.
Cette tâche peut bien entendu être interrompue (supprimée si elle est exclusive) par l'arrivée d'événements plus prioritaires, tels que la détection d'un écart spatial avec la trajectoire en cours, le passage dans une autre zone de mission, la demande d'un retour d'urgence, la désignation d'un nouveau but de destination, ou encore l'arrivée d'une panne.

La tâche d'entretien du timing exécute la méthode prédéfinie de reconfiguration de trajectoire dont l'algorithme est représenté sur la figure 3.

A la première étape de cette méthode prédéfinie de reconfiguration de trajectoire, le calculateur 1 exécute un module spécialisé 22 de régulation de vitesse conçu pour recalculer les vitesses de parcours de la trajectoire en cours, en tenant compte de la position de l'aéronef sur cette trajectoire, des contraintes temporelles et spatiales imposées par la mission, des possibilités de manoeuvre de l'aéronef, et de la quantité de carburant disponible, ces informations étant fournies par la mémoire de masse 9.
Ce module 22 indique en réponse si les contraintes imposées par la mission peuvent être satisfaites en suivant la trajectoire en cours, avec une marge en carburant suffisante, compte tenu de la phase courante de la mission (phase aller ou phase retour). Si tel est le cas, il fournit une trajectoire identique à celle en cours, mais avec un nouveau profil de vitesses de parcours. A l'étape 23 de ce cette méthode prédéfinie de reconfiguration de trajectoire, le calculateur détermine si le module 22 a résolu le problème de timing. Si oui, la méthode prédéfinie de reconfiguration de trajectoire est terminée et la trajectoire courante avec le nouveau profil de vitesses est proposée au pilote. Si non, elle se poursuit par l'appel du module spécialisé 24 de détermination des marges, qui permet d'évaluer les écarts en temps et carburant sur la trajectoire en cours par rapport à ce qui était prévu. Si l'aéronef se trouve en avance sur sa trajectoire et sans problème d'autonomie en carburant (étape 25), la méthode prédéfinie de reconfiguration de trajectoire appelle un autre module spécialisé 26 de calcul d'une trajectoire rallongée pour absorber l'avance de l'aéronef. Dans le cas contraire, elle appelle un module spécialisé 27 de calcul d'une trajectoire raccourcie.

Cet algorithme fournit dans tous les cas une nouvelle trajectoire que le calculateur 1 propose au pilote en l'affichant sur l'écran 2 en surimpression sur la trajectoire en cours. Par une simple commande, par exemple l'actionnement d'un bouton de commande sur le manche de pilotage 4, le pilote peut valider cette nouvelle trajectoire, ce qui déclenche la transmission de celle-ci par le calculateur 1 vers le dispositif de pilotage automatique 5.

Il est à noter que cette méthode prédéfinie de reconfiguration de trajectoire peut être appelée par d'autres méthodes prédéfinies de reconfiguration de trajectoire 15 dans lesquelles l'aspect temporel doit être traité.

A tout instant, le pilote peut forcer l'activation d'un des modules spécialisés 26 ou 27 en reprenant le contrôle des commandes de pilotage et en prenant une trajectoire qui va logiquement déclencher cette activation.

Selon une particularité de l'invention, des valeurs de priorité respectives sont associées aux contraintes spatiales, temporelles et en carburant pour chaque étape d'une mission, comme montré sur les courbes représentées sur la figure 4. Ces indices de priorité qui font partie des données de mission, sont pris en compte par le module de gestion des événements 12, lors de la détermination de l'événement le plus prioritaire à traiter, par le module de gestion des tâches 13, dans les méthodes prédéfinies de reconfiguration de trajectoire 15 et dans les modules spécialisés pour déterminer la trajectoire répondant au mieux au problème posé par l'événement traité.

Ainsi, sur la figure 4, la contrainte de temps est très prioritaire durant la première étape de la mission. Pendant cette étape, le module de gestion des tâches 13 va sélectionner en priorité les événements ayant une répercussion sur le respect du timing de la mission. Ensuite, pendant les étapes 2 à 4 de la mission, les priorités des contraintes d'espace et de temps sont sensiblement équivalentes, les trajectoires de reconfiguration élaborées vont donc privilégier le suivi de la trajectoire initiale dans les temps prévus. A l'étape 5, les priorités des trois contraintes en temps, espace et carburant sont sensiblement équivalentes. Il en résulte que les trajectoires qui vont être élaborées ne vont pas privilégier l'une ou l'autre de ces contraintes. Aux étapes 6 à 8, qui correspondent à la phase de retour, la contrainte en carburant est primordiale, ce qui est justifié par le fait que la quantité de carburant disponible et la consommation de l'aéronef conditionnent l'arrivée de celui-ci à la base de retour prévue. L'étape 7 est marquée par une contrainte spatiale, correspondant à la présence, pendant cette étape d'un point de passage imposé.

De cette manière, les contraintes appliquées à la mission sont prises en compte dès le début du traitement d'un événement et lors de la sélection d'une méthode prédéfinie de reconfiguration de trajectoire, avant d'effectuer les calculs coûteux en puissance et en temps de calcul, de détermination d'une trajectoire de reconfiguration.

Les calculateurs existant à bord des aéronefs actuels peuvent, grâce au procédé qui vient d'être décrit, calculer une nouvelle trajectoire pertinente avec une périodicité de l'ordre de la seconde. Compte tenu des vitesses des aéronefs civils ou militaires actuels, et des marges d'erreur autorisées, les trajectoires ainsi proposées au pilote ne sont jamais obsolètes.

Le procédé de reconfiguration en temps réel, de trajectoire pour aéronef qui vient d'être décrit, présente une architecture, ou enchaînement d'étapes, permettant de séparer clairement les connaissances qui sont propres à chaque domaine de résolution (type de trajectoire horizontale, verticale, évitement, ravitaillement, coupure de trajectoire, extension de trajectoire, passage dans des zones imposées) des connaissances permettant un contrôle relatif aux stratégies de résolution des problèmes.

Les méthodes prédéfinies de reconfiguration de trajectoire adaptées aux diverses catégories de contextes aéronef-mission les plus probables qui peuvent se présenter à l'équipage d'un aéronef en cas d'événements imprévus, mettant à contribution des modules spécialisés traitant des problèmes spécifiques de reconfiguration de trajectoire, ont avantageusement un nombre limité d'étapes afin de garantir l'obtention d'une proposition de reconfiguration de trajectoire en un temps limité quel que soit le contexte aéronef-mission. Cette proposition de reconfiguration de trajectoire peut alors être rafraîchie périodiquement afin de donner au pilote une vision continue des possibilités de reconfiguration de la mission.

## Revendications

1. Procédé de reconfiguration, en temps réel, d'une trajectoire pour un aéronef, cette trajectoire étant notamment exécutable par un dispositif de pilotage automatique, ce procédé étant mis en oeuvre par un calculateur recevant en temps réel des informations fournies par des organes embarqués à bord de l'aéronef, concernant la situation de l'aéronef par rapport à son environnement spatial et temporel, son autonomie, ses possibilités d'évolution et mémorisant des données concernant la mission de l'aéronef pouvant, éventuellement, être mises à jour en cours de mission, dont une trajectoire nominale en cinq dimensions: trois dimensions spatiales, une dimension temporelle et une dimension représentative de l'autonomie en carburant, ces informations constituant un contexte aéronef-mission temps réel, ce calculateur étant relié à un dispositif de pilotage automatique et à un afficheur donnant une représentation de la trajectoire en cours et indiquant la position courante de l'aéronef par rapport à cette trajectoire, ledit procédé comprenant, en vue d'adapter la mission à une situation nouvelle engendrée par l'arrivée d'un événement perturbateur:
• la mise à jour des données de contexte aéronef-mission temps réel modifié par l'arrivée de l'événement perturbateur, et
• la détection, dans le contexte aéronef-mission temps réel mis à jour, de l'apparition d'un ou plusieurs événements justifiant une reconfiguration de la trajectoire nominale,
et étant **caractérisé en ce qu'**il comporte, à la suite des étapes précédentes:
• la sélection, des la détection d'un événement justifiant une reconfiguration de la trajectoire nominale, en fonction du contexte aéronef-mission temps réel mis à jour, d'une méthode de reconfiguration de trajectoire parmi une collection de méthodes prédéfinies de reconfiguration de trajectoire disponibles en mémoire dans le calculateur, permettant chacune, par leur mise en oeuvre, l'obtention d'une seule trajectoire reconfigurée, chacune de ces méthodes prédéfinies de reconfiguration de trajectoire étant adaptée à une catégorie spécifique et prédéfinie de contexte aéronef-mission, ladite sélection d'une méthode prédéfinie de reconfiguration de trajectoire s'effectuant par assimilation du contexte aéronef-mission temps réel à la catégorie de contexte aéronef-mission prédéfinie la plus proche, à partir de critères de sélection portant notamment, sur les valeurs des écarts spatial, temporel et d'autonomie en carburant constatés par rapport à la trajectoire nominale, la méthode prédéfinie de reconfiguration de trajectoire sélectionnée traduisant directement la stratégie opérationnelle habituellement mise en oeuvre par les équipages des aéronefs placés dans la catégorie de contexte aéronef-mission prédéfinie choisie,
• l'exécution de la méthode prédéfinie de reconfiguration sélectionnée, qui détermine en fonction des données de mission et du contexte temps réel, une nouvelle trajectoire exécutable par le système de pilotage automatique,
• l'affichage sur l'afficheur de la nouvelle trajectoire, en surimpression sur la trajectoire en cours, et
- si le pilote de l'aéronef valide cette nouvelle trajectoire, la transmission des informations caractérisant cette nouvelle trajectoire au dispositif de pilotage automatique.

2. Procédé selon la revendication 1,
**caractérisé en ce que** les méthodes prédéfinies de reconfiguration comportent un nombre limité d'étapes afin de garantir une proposition de reconfiguration de trajectoire en un temps limité quel que soit le contexte aéronef-mission temps réel.

3. Procédé selon la revendication 1,
**caractérisé en ce que** la mise à jour du contexte aéronef-mission temps réel comporte une analyse de la situation temps réelle dite surveillance de l'environnement, tenant compte:
• de données propres à la mission comportant des informations enregistrées avant le vol ou reçues au cours du vol dont la trajectoire nominale en cinq dimensions, des mentions de zones dangereuses, de points de passage imposés etc.,
• des données propres à l'aéronef comme sa position spatio-temporelle, la quantité de carburant effectivement disponible, la phase de vol dans laquelle il se trouve, les zones d'obstacles nouvellement apparues, les prévisions de changement de phase de vol, les pannes éventuelles, l'évolution météorologiques, etc...

4. Procédé selon la revendication 3,
**caractérisé en ce que** les données de mission comprennent un tableau de valeurs de priorité de contraintes, donnant les valeurs de priorités de contraintes de temps, d'espace et de carburant, à chaque étape de la mission en cours, le procédé comprenant la prise en compte de ces valeurs de priorité lors de J'analyse du contexte temps réel pour sélectionner une méthode prédéfinie de reconfiguration, et lors de l'exécution d'une méthode prédéfinie de configuration pour déterminer une nouvelle trajectoire.

5. Procédé selon l'une des revendications précédentes,
**caractérisé en ce que** l'exécution d'une méthode prédéfinie de reconfiguration est effectuée au cours d'une tâche indépendante, de type exclusive ou non, aléatoire ou cyclique.

6. Procédé selon l'une des revendications précédentes,
**caractérisé en ce que** l'exécution d'une méthode prédéfinie de reconfiguration de trajectoire est cyclique, pour tenir compte de l'évolution du contexte aéronef-mission temps réel, la nouvelle trajectoire calculée remplaçant sur l'afficheur la trajectoire précédemment proposée, de manière à ce que la trajectoire affichée sur l'afficheur soit toujours pertinente par rapport au contexte aéronef-mission temps réel.

7. Procédé selon l'une des revendications précédentes,
**caractérisé en ce que**, pour la fourniture d'informations sur demande, il comprend la mise à jour du contexte temps réel pour mémoriser qu'une demande d'information est apparue, la génération d'un événement de demande d'informations, et l'activation d'une tâche d'exécution d'une méthode prédéterminée spécifique de reconfiguration conçue pour déterminer et afficher les informations demandées, cette tâche étant aléatoire et de niveau de priorité élevé pour pouvoir afficher rapidement les informations demandées.

## Patentansprüche

1. Verfahren zum Rekonfigurieren einer Bahn für ein Flugzeug in Echtzeit, wobei diese Bahn insbesondere von einer Selbststeuervorrichtung ausführbar ist, wobei dieses Verfahren von einem Rechner ausgeführt wird, der in Echtzeit Informationen empfängt, die von an Bord des Flugzeugs installierten Organen geliefert werden und die Situation des Flugzeugs in Bezug auf seine räumliche und zeitliche Umgebung, seine Reichweite und seine Veränderungsmöglichkeiten betreffen, und Daten speichert, die die Flugaufgabe des Flugzeugs betreffen und eventuell während der Flugaufgabe aktualisiert werden können, wobei eine Sollbahn fünf Dimensionen besitzt: drei räumliche Dimensionen, eine zeitliche Dimension und eine die Kraftstoffreichweite repräsentierende Dimension, wobei diese Informationen einen Echtzeit-Flugzeug/Flugaufgabe-Kontext bilden, wobei dieser Rechner mit einer Selbststeuervorrichtung und mit einer Anzeigevorrichtung verbunden ist, die eine Darstellung der momentanen Bahn anzeigt und die momentane Position des Flugzeugs in Bezug auf diese Bahn angibt, wobei das Verfahren im Hinblick auf die Anpassung der Flugaufgabe an eine neue Situation, die durch Auftreten eines Störereignisses geschaffen wird, umfasst:
- Aktualisieren der Daten des Echtzeit-Flugzeug/Flugaufgabe-Kontexts, der durch die Ankunft des Störereignisses modifiziert wird, und
- Erfassen des Auftretens eines oder mehrerer Ereignisse, die eine Rekonfiguration der Sollbahn rechtfertigen, im aktualisierten Echtzeit-Flugzeug/Flugaufgabe-Kontext,
**dadurch gekennzeichnet, dass** es nach den obigen Schritten umfasst:
- wenn ein Ereignis erfasst wird, das eine Rekonfiguration der Sollbahn rechtfertigt, Auswählen eines Verfahrens zur Rekonfiguration der Bahn aus einer Sammlung von im Voraus definierten Bahnrekonfigurationsverfahren, die im Speicher des Rechners verfügbar sind, in Abhängigkeit von dem aktualisierten Echtzeit-Flugzeug/Flugaufgabe-Kontext, wobei jedes der Verfahren durch seine Ausführung ermöglicht, eine einzige rekonfigurierte Bahn zu erhalten, wobei jedes dieser im Voraus definierten Bahnrekonfigurationsverfahren an eine bestimmte und im Voraus definierte Kategorie des Flugzeug/Flugaufgabe-Kontexts angepasst ist, wobei die Auswahl eines im Voraus definierten Bahnrekonfigurationsverfahrens durch Anpassung des Echtzeit-Flugzeug/Flugaufgabe-Kontexts an die nächstliegende im Voraus definierte Kategorie des Flugzeug/Flugaufgabe-Kontexts anhand von Auswahlkriterien erfolgt, die sich insbesondere auf die Werte des räumlichen und zeitlichen Abstands und der Kraftstoffreichweitendifferenz in Bezug auf die Sollbahn stützen, wobei das ausgewählte im Voraus definierte Bahnrekonfigurationsverfahren die Operationsstrategie, die normalerweise von den Ausrüstungen der Flugzeuge ausgeführt wird, die in die gewählte im Voraus definierte Kategorie des Flugzeug/Flugaufgaben-Kontexts fallen, direkt überführt in
- das Ausführen des ausgewählten im Voraus definierten Rekonfigurationsverfahrens, das in Abhängigkeit von den Flugaufgabe-Daten und des Echtzeit-Kontexts eine neue Bahn bestimmt, die von dem Selbststeuersystem ausführbar ist,
- das Anzeigen der neuen Bahn auf der Anzeigevorrichtung durch Überlagerung über der momentanen Bahn und
- falls der Pilot des Flugzeugs diese neue Bahn für gültig erklärt, das Senden der diese neue Bahn kennzeichnenden Informationen an die Selbststeuervorrichtung.

2. Verfahren nach Anspruch 1, **dadurch gekennzeichnet, dass** die im Voraus definierten Rekonfigurationsverfahren eine begrenzte Anzahl von Schritten umfassen, um einen Rekonfigurationsvorschlag für die Bahn unabhängig vom Echtzeit-Flugzeug/Flugaufgabe-Kontexts in einer begrenzten Zeit zu gewährleisten.

3. Verfahren nach Anspruch 1, **dadurch gekennzeichnet, dass** die Aktualisierung des Echtzeit-Flugzeug/Flugaufgaben-Kontexts eine Analyse der Echtzeitsituation, die Umgebungsüberwachung genannt wird, umfasst, die berücksichtigt:
- Daten bezüglich der Flugaufgabe, die vor dem Flug aufgezeichnete oder während des Flugs empfangene Informationen umfassen, unter anderem die Sollbahn in fünf Dimensionen, Angaben gefährlicher Zonen, zugewiesene Durchgangspunkte usw.,
- Daten bezüglich des Flugzeugs wie etwa seine raumzeitliche Position, die effektiv verfügbare Kraftstoffmenge, die Flugphase, in der es sich befindet, die Zonen neu aufgetretener Hindernisse, Vorhersagen von Flugphasenänderungen, eventuelle Pannen, die meteorologische Entwicklung usw.

4. Verfahren nach Anspruch 3, **dadurch gekennzeichnet, dass** die Flugaufgabe-Daten eine Tabelle von Prioritätswerten von Zwängen umfassen, die die Prioritätswerte von Zeit-, Raum- und Kraftstoffzwängen auf jeder Stufe der momentanen Flugaufgabe angeben, wobei das Verfahren die Berücksichtigung dieser Prioritätswerte umfasst, wenn es den Echtzeitkontext analysiert, um ein im Voraus definiertes Rekonfigurationsverfahren auszuwählen, und wenn es ein im Voraus definiertes Konfigurationsverfahren ausführt, um eine neue Bahn zu bestimmen.

5. Verfahren nach einem der vorhergehenden Ansprüche, **dadurch gekennzeichnet, dass** die Ausführung eines im Voraus definierten Rekonfigurationsverfahrens während einer unabhängigen Aufgabe des ausschließlichen oder nicht ausschließlichen, zufälligen oder zyklischen Typs erfolgt.

6. Verfahren nach einem der vorhergehenden Ansprüche, **dadurch gekennzeichnet, dass** die Ausführung eines im Voraus definierten Bahnrekonfigurationsverfahrens zyklisch ist, um die Entwicklung des Echtzeit-Flugzeug/Flugaufgaben-Kontexts zu berücksichtigen, wobei die berechnete neue Bahn auf der Anzeigevorrichtung die vorher vorgeschlagene Bahn ersetzt, so dass die auf der Anzeigevorrichtung angezeigte Bahn in Bezug auf den Echtzeit-Flugzeug/Flugaufgaben-Kontexts stets angemessen ist.

7. Verfahren nach einem der vorhergehenden Ansprüche, **dadurch gekennzeichnet, dass** es für die Lieferung von Informationen auf Anforderung die Aktualisierung des Echtzeitkontexts, um zu speichern, dass eine Informationsanforderung aufgetreten ist, die Erzeugung eines Informationsanforderungsereignisses sowie die Aktivierung einer Aufgabe zum Ausführen eines bestimmten vorgegebenen Rekonfigurationsverfahrens umfasst, die so ausgelegt ist, dass sie die angeforderten Informationen bestimmt und anzeigt, wobei diese Aufgabe zufällig ist und ein hohes Prioritätsniveau hat, um die angeforderten Informationen schnell anzeigen zu können.

## Claims

1. Process for the real-time reconfiguring of a trajectory for an airborne vehicle, this trajectory being executable, in particular, by an automatic pilot device, this process being performed by a computer which, in real time, receives information supplied by members on board the airborne vehicle regarding the situation of the airborne vehicle with respect to its spatial and temporal environment, its range and its manoeuvrability, and stores data regarding the mission of the airborne vehicle which may possibly be updated in the course of the mission, including a nominal trajectory in five dimensions: three spatial dimensions, a time dimension and a dimension which represents the fuel-dependent range, this information constituting a real-time airborne vehicle-mission context, this computer being connected to an automatic pilot device and to a display which gives a depiction of the current trajectory and indicates the current position of the airborne vehicle with respect to this trajectory, the said process comprising, with a view to adapting the mission to suit a new situation which has arisen as the result of a disrupting event:
• updating the data relating to the real-time airborne vehicle-mission context that has been altered by the occurrence of the disrupting event, and
• detecting, within the updated real-time airborne vehicle-mission context, the occurrence of one or more events that justify reconfiguring the nominal trajectory,
and being **characterized in that** it involves, after the above stages:
• selecting, as soon as an event that justifies reconfiguring the nominal trajectory is detected, according to the updated real-time airborne vehicle-mission context, a trajectory-reconfiguring method from a collection of predefined trajectory-reconfiguring methods available in memory in the computer, each one, when implemented, allowing a single reconfigured trajectory to be obtained, each of these predefined trajectory-reconfiguring methods being tailored to a specific and predefined category of airborne vehicle-mission context, the said selection of a predefined trajectory-reconfiguring method being made by likening the real-time airborne vehicle-mission context to the closest predefined category of airborne vehicle-mission context on the basis of selection criteria relating, in particular, to the values of the spatial, temporal and fuel-dependent range differences observed with respect to the nominal trajectory, the selected predefined trajectory-reconfiguring method directly translating the operational strategy customarily employed by aircrew placed in the chosen predefined category of airborne vehicle-mission context,
• executing the selected predefined reconfiguration method which, according to the mission data and the real-time context, determines a new trajectory that the automatic pilot system can execute,
• displaying the new trajectory on the display as an overlay on the current trajectory, and
• if the pilot of the airborne vehicle validates this new trajectory, transmitting information characterizing this new trajectory to the automatic pilot device.

2. Process according to Claim 1,
**characterized in that** the predefined reconfiguration methods involve a limited number of steps in order to guarantee that a reconfigured trajectory can be proposed in a limited amount of time regardless of the real-time airborne vehicle-mission context.

3. Process according to Claim 1,
**characterized in that** updating the real-time airborne vehicle-mission context involves analysing the real-time situation otherwise known as monitoring the environment, to take account of:
• data specific to the mission and containing information recorded prior to flight or received during flight, including the five-dimensional nominal trajectory, notes on danger areas, compulsory waypoints, etc.,
• data specific to the airborne vehicle, such as its spatio-temporal position, the amount of fuel actually available, its phase of flight, newly appeared obstacle zones, predicted changes in flight phase, any faults which may have occurred, changes in weather conditions, etc.

4. Process according to Claim 3,
**characterized in that** the mission data contains a table of constraint priority values which give the priority values for constraints in terms of time, space and fuel to each stage of the current mission, the process involving taking these priority values into consideration when analysing the real-time context in order to select a predefined reconfiguration method and when executing a predefined configuration method in order to determine a new trajectory.

5. Process according to one of the preceding claims,
**characterized in that** a predefined reconfiguration method is executed during an independent task which may or may not be of the exclusive type, random or cyclic.

6. Process according to one of the preceding claims,
**characterized in that** a predefined trajectory-reconfiguring method is executed cyclically, to take account of the change in the real-time airborne vehicle-mission context, the calculated new trajectory replacing the previously proposed trajectory on the display so that the trajectory displayed on the display is always relevant to the real-time airborne vehicle-mission context.

7. Process according to one of the preceding claims,
**characterized in that**, in order to supply information on demand, it involves updating the real-time context to store the fact that a request for information has been made, generating an information-request event, and activating a task to execute a specific predetermined reconfiguration method designed to determine and display the requested information, this task being random and of a high level of priority so that the requested information can be displayed quickly.
